# EUROPÄISCHE PATENTSCHRIFT

(11) **EP 3 883 821 B1**
(45) Veröffentlichungstag und Bekanntmachung des Hinweises auf die Patenterteilung: **21.02.2024**
(21) Anmeldenummer: 19809402.1
(22) Anmeldetag: 19.11.2019
(51) Int. Cl.: B60R 21/201

(54) **MONTAGEHÜLLE FÜR EINEN GASSACK, GASSACKMODUL, FAHRZEUGINSASSENSICHERHEITSSYSTEM UND VERFAHREN ZUM AUFBLASEN EINES GASSACKS**
MOUNTING SLEEVE FOR AN AIRBAG, AIRBAG MODULE, VEHICLE OCCUPANT SAFETY SYSTEM, AND METHOD FOR INFLATING AN AIRBAG
GAINE DE MONTAGE POUR UN AIRBAG, MODULE AIRBAG, SYSTÈME DE SÉCURITÉ POUR OCCUPANT DE VÉHICULE ET PROCÉDÉ DE GONFLAGE D'UN AIRBAG

(30) Priorität: 19.11.2018 DE 102018128986
(43) Veröffentlichungstag der Anmeldung: 29.09.2021
(73) Patentinhaber: Dalphi Metal España, S.A., 36213 Vigo (ES)
(72) Erfinder: GONZÁLEZ LÓPEZ, Cristina, 36206 Vigo (ES); SÁNCHEZ RODRÍGUEZ, Estér, 36380 Gondomar (ES)
(74) Vertreter: ZF Patentabteilung - DIPS
(86) Internationale Anmeldenummer: PCT/EP2019/081835
(87) Internationale Veröffentlichungsnummer: WO 2020/104474

(56) Entgegenhaltungen:
- EP-A1- 2 910 434
- DE-A1-102009 024 142
- DE-A1-102016 003 280
- DE-U1-202016 004 121
- JP-A- 2010 006 332
- KR-A- 20090 117 421
- KR-A- 20130 095 027
- KR-A- 20140 014 926

## Beschreibung

Die Erfindung betrifft eine Montagehülle zur Aufnahme eines Gassacks für ein Fahrzeuginsassen-Rückhaltesystem gemäß dem Oberbegriff des Patentanspruchs 1. Daneben betrifft die Erfindung ein Gassackmodul für ein Fahrzeuginsassen-Rückhaltesystem, ein Fahrzeuginsassensicherheitssystem und ein Verfahren zum Aufblasen eines Gassacks.

Fahrzeuginsassensicherheitssysteme weisen in Kraftfahrzeugen üblicherweise Gassackmodule oder Airbagmodule auf, die einen Gassack umfassen. Der Gassack wird im Falle eines Aufpralls aufgeblasen, um die Wahrscheinlichkeit einer Kollision von Körperteilen eines Fahrzeuginsassen mit einem Fahrzeugbauteil, wie beispielsweise der Fahrzeugkarosserie, dem Lenkrad oder dem Armaturenbrett, zu reduzieren. Im Falle von Frontal- und Seitenaufprallunfällen ist das Vorhandensein einer Aufprallfläche zum Abfangen des Kopfes eines Insassen von großer Wichtigkeit. Der Gassack ist in einer Montagehülle angeordnet, welche eine Naht und einen zu dieser beabstandeten ersten Vorschnitt umfasst, der eine Perforierung aufweist. Die Perforierung dient zum Öffnen der Montagehülle, wenn der Gassack aufgeblasen wird. Das Dokument EP 2 910 434 A1 offenbart das Vorsehen vertikaler Vorschnitte in der Mitte der Montagehülle. Ziel ist es ein Austreten des Gassackes unmittelbar am mittig angeordneten Gasgenerator zu verbessern. Das Dokument JP 2010 006332 A offenbart eine Montagehülle mit offenen Enden. Entlang der Montagehülle erstreckt sich eine singuläre Aufreißlinie. Innerhalb der Montagehülle ist ein Gassack in gefaltetem Zustand angeordnet und ragt aus dem einen offenen Ende der Montagehülle hervor. Das offene Ende der Montagehülle ist zu der einzigen Aufreißlinie hin abgeschrägt zugeschnitten. Dies soll beim Aufblasen entstehende Anspannungen auf die Aufreißlinie richten.

Nachteilig im Stand der Technik ist, dass der insbesondere in einem Seitenbereich des Kraftfahrzeugs angeordnete Gassack beim Aufblasen der Anfangs- und/ oder Endabschnitte der Montagehülle, insbesondere den ersten Vorschnitt nur teilweise oder gar nicht sofort öffnet. Die beim Aufblasen durch den Gassack entstehenden Kräfte hängen unter anderem von der Temperatur und der Temperatur des Gasgenerators, insbesondere des Gases ab. Falls die Temperatur des Gases sehr niedrig ist und/oder ein Gasgenerator des Gassacks zu wenig Gas bereitstellt, können die durch den Gassack erzeugten und auf die Montagehülle wirkenden Kräfte zu gering sein, um den ersten Vorschnitt in der gewünschten Geschwindigkeit zu öffnen. Dabei kann es dann vorkommen, dass die beim Aufblasen des Gassacks entstehenden Kräfte hauptsächlich auf die Mitte der Montagehülle wirken und weniger auf die Endbereiche Montagehülle, insbesondere auf die vorderen und/oder hinteren Randbereiche des ersten Vorschnittes wirken. Im Ergebnis kann sich unter Umständen der erste Vorschnitt in seinen Endbereichen nur teilweise oder gar nicht öffnen, so dass eine vollständige Entfaltung nur verzögert erfolgt.

Es ist die Aufgabe der vorliegenden Erfindung, eine Montagehülle für einen Gassack bereitzustellen, welche ein zuverlässiges Austreten des Gassacks in kürzerer Zeit, insbesondere auch in allen relevanten Temperaturen gewährleistet. Ferner ist es die Aufgabe der Erfindung, ein Gassackmodul für ein Fahrzeuginsassen-Rückhaltesystem, ein Fahrzeuginsassensicherheitssystem und ein Verfahren zum Aufblasen eines Gassacks anzugeben.

Erfindungsgemäß wird diese Aufgabe im Hinblick auf die Montagehülle für den Gassack durch den Gegenstand des Anspruchs 1, im Hinblick auf das Gassackmodul durch den Gegenstand des Anspruchs 9, im Hinblick auf das Fahrzeuginsassen-Sicherheitssystem durch den Gegenstand des Anspruchs 10 und im Hinblick auf das Verfahren zum Aufblasen eines Gassacks durch den Gegenstand des Anspruchs 11 gelöst.

Vorteilhafte und zweckmäßige Ausgestaltungen der erfindungsgemäßen Montagehülle für den Gassack sind in den Unteransprüchen angegeben.

Der Vorteil der erfindungsgemäßen Montagehülle für den Gassack besteht darin, dass durch den zweiten Vorschnitt unabhängig von der Temperatur und der Funktionsweise des Gasgenerators immer sichergestellt wird, dass die durch den Gassack erzeugten Kräfte auf den ersten Vorschnitt wirken. Durch den zweiten Vorschnitt wird somit verhindert, dass sich die Naht öffnet und die beim Aufblasen durch den Gassack entstehenden Kräfte werden in Richtung des ersten Vorschnitts geleitet. Dadurch wird der erste Vorschnitt bei allen relevanten Temperaturen schneller geöffnet und der Gassack kann aus der Montagehülle herauskommen und in der gewünschten Richtung (z.B. zu einem Fahrzeuginsassen hin) austreten.

Ein Gassack wrid auch als Airbag oder als Aufprallkissen bezeichnet. Der Gassack ist Teil eines Gassackmoduls. Das Gassackmodul ist Teil eines FahrzeuginsassenSicherheitssystems. Der Gassack ist vorzugsweise aus einem Kunststoffgewebe hergestellt, der sich bei einem Auslösefall innerhalb von Millisekunden zwischen einem Insassen und Teilen des Fahrzeuginnenraumes entfaltet. Dadurch kann bestenfalls verhindert werden, dass der Fahrzeuginsasse ungebremst gegen harte Teile des Innenraumes wie Lenkrad oder Armaturenbrett prallt. Das Fahrzeuginsassen-Sicherheitssystem wird insbesondere durch starke (negative) Beschleunigungswerte ausgelöst, welche deutlich über Werten liegen, wie sie alleine durch eine Vollbremsung erreicht werden.

Efindungsgemäß ist vorgesehen, dass die Montagehülle einen dritten Vorschnitt aufweist, der zumindest teilweise zwischen der Naht und dem ersten Vorschnitt angeordnet ist. Dadurch wird ein noch schnelleres Öffnen des jeweiligen Endabschnittes ersten Vorschnitts sichergestellt, wenn sich der Gassack aufbläst. Die beim Aufblasen des Gassacks entstehenden Kräfte werden zusätzlich durch den dritten Vorschnitt in Richtung des ersten Vorschnitts geleitet, so dass der erste Vorschnitt noch schneller und zuverlässiger geöffnet wird.

Auch ist gemäß der Erfindung vorgesehen, dass der erste Vorschnitt, der zweite Vorschnitt und der dritte Vorschnitt einen ersten Abschnitt der Montagehülle in eine erste Zone, eine zweite Zone und eine dritte Zone aufteilen, wobei die zwischen der ersten Zone und der dritten Zone angeordnete zweite Zone an dem ersten Vorschnitt beim Aufblasen des Gassacks einen Sollrissabschnitt ausbildet. Durch diese Anordnung des ersten Vorschnitts und des dritten Vorschnitts wird in vorteilhafterweise sichergestellt, dass der Bereich der Montagehülle, welcher dem Fahrzeuginsassen zugewandt ist, beim Aufblasen schnell geöffnet wird.

Die Herstellung der Montagehülle wird vereinfacht, wenn der zweite Vorschnitt und/oder der dritte Vorschnitt als durchgehender und ununterbrochener Schnitt ausgebildet ist. Der zweite Vorschnitt und der dritte Vorschnitt können mit Hilfe einer Schneidvorrichtung, insbesondere mit einem Schneidmesser einfach und kostengünstig in die Montagehülle eingeschnitten werden.

Nach einer weiteren bevorzugten Ausführungsform ist vorgesehen, dass der zweite Vorschnitt und/oder der dritte Vorschnitt eine Perforierung aufweist. Wenn alle Vorschnitte eine Perforierung aufweisen, die vorzugsweise dieselbe Ausgestaltung aufweist, kann in vorteilhafterweise bei der Herstellung der Montagehülle dasselbe Werkzeug benutz werden, wodurch die Herstellungskosten der Montagehülle ebenfalls verringert werden.

Nach einer weiteren bevorzugten Ausführungsform ist vorgesehen, dass der zweite Vorschnitt und/oder der dritte Vorschnitt zumindest teilweise von der Naht zum ersten Vorschnitt diagonal verlaufend angeordnet ist. Dadurch wird beispielsweise der Vorteil erreicht, dass beim Auftreten von Kräften, welche beim Aufblasen des Gassacks entstehen und auf die Naht wirken, durch die diagonal verlaufenden Vorschnitte die Kräfte auf den ersten Vorschnitt umgeleitet werden. Durch die diagonal verlaufenden Vorschnitte wirkt somit immer ein X-Teil und ein Y-Teil der Kraft auf den ersten Vorschnitt, so dass ein Öffnen des ersten Vorschnitts beim Aufblasen des Gassacks gewährleistet wird. Daher ist vorgesehen, dass sich der zweite Vorschnitt und/oder der dritte Vorschnitt von der Naht bis zum ersten Vorschnitt erstreckt.

Der erste Vorschnitt wird sicher und zuverlässig beim Aufblasen des Gassacks geöffnet, wenn ein Winkel α zwischen dem zweiten Vorschnitt und der Naht und/oder dem ersten Vorschnitt 40° bis 60° beträgt. Dieser Effekt kann weiter verbessert werden, wenn ein Winkel β zwischen dem dritten Vorschnitt und der Naht und/oder dem ersten Vorschnitt 40° bis 60° beträgt.

Nach einer weiteren bevorzugten Ausführungsform ist vorgesehen, dass ein Teilabschnitt der Naht und ein Teilabschnitt des ersten Vorschnitts mit dem zweiten Vorschnitt und dem dritten Vorschnitt ein Parallelogramm bilden, wobei der erste Vorschnitt parallel zur Naht angeordnet ist und der zweite Vorschnitt parallel zum dritten Vorschnitt angeordnet ist. Gemäß dieser Ausgestaltung hat sich überraschenderweise gezeigt, dass der erste Vorschnitt unabhängig von der Temperatur des Gases sich hervorragend beim Aufblasen des Gassacks öffnet. Die auf den ersten Vorschnitt wirkenden Kräfte werden gebündelt und wirken zielgerichtet auf diesen, wenn der Gassack sich aufbläst.

Nach einer weiteren bevorzugten Ausführungsform ist vorgesehen, dass die Montagehülle schlauchförmig ausgebildet ist. Dadurch kann der Gassack einfach in der Montagehülle montiert werden und zusätzlich kann aufgrund der schlauchförmigen Ausgestaltung des Gassacks dieser auch bei einem gering zur Verfügung stehenden Bauraum im Kraftfahrzeug sicher und einfach in diesem verbaut werden.

Hinsichtlich des Gassackmoduls für ein Fahrzeuginsassen-Rückhaltesystem wird die Aufgabe durch die Merkmale des Patentanspruchs 9 gelöst.

Ein derartiges erfindungsgemäßes Gassackmodul für ein Fahrzeuginsassen-Rückhaltesystem kann insbesondere als Seitenvorhanggassackmodul, Fahrerfrontgassackmodul, Beifahrerfrontgassackmodul, Heckscheibenvorhanggassackmodul oder Insassen-Interaktionsgassackmodul ausgebildet sein und umfasst einen erfindungsgemäßen Gassack. Es ergeben sich dadurch ähnliche Vorteile, wie diese bereits im Zusammenhang mit der erfindungsgemäßen Montagehülle für den Gassack erläutert wurden.

Hinsichtlich des Fahrzeuginsassensicherheitssystems wird die Aufgabe durch die Merkmale des Patentanspruchs 10 gelöst.

Ein derartiges erfindungsgemäßes Fahrzeuginsassensicherheitssystem, insbesondere zum Schutz einer Person, beispielsweise eines Fahrzeuginsassen, weist ein Gassackmodul mit einem Gassack und einer erfindungsgemäßen Montagehülle auf, sowie wenigstens einen Sensor zur Erfassung von Fahrzeugzustandsdaten sowie eine Aktivierungseinheit, die ausgebildet ist, ein Auslösesignal in Abhängigkeit erfasster Fahrzeugbewegungsdaten an das Gassackmodul zu senden.

Es ergeben sich ähnliche Vorteile, wie diese bereits im Zusammenhang mit der erfindungsgemäßen Montagehülle für den Gassack und/oder mit dem erfindungsgemäßen Gassackmodul erläutert wurden.

Hinsichtlich des Verfahrens zum Aufblasen eines Gassacks wird die Aufgabe durch die Merkmale des Patentanspruchs 11 gelöst.

Ein derartiges erfindungsgemäßes Verfahren zum Aufblasen des erfindungsgemäßen Gassacks umfasst die Schritte, dass das Gassackmodul ausgelöst und aufgeblasen wird, die Montagehülle aufgebläht und der erste Vorschnitt zumindest im Bereich des Sollrissabschnitts der zweiten Zone an dem ersten Vorschnitt aufreißt, und der Gassack aus der Montagehülle heraustritt. Der Vorteil des erfindungsgemäßen Verfahrens besteht darin, dass der Gassack schneller aus der Montagehülle austreten kann.

Die Erfindung wird im Folgenden anhand eines Ausführungsbeispiels unter Bezugnahme auf die beigefügten schematischen Figuren näher erläutert. Darin zeigen:
Fig. 1 eine schematische Darstellung einer Montagehülle mit einem Gassack aus dem Stand der Technik in einer Seitenansicht;
Fig. 2 eine schematische Darstellung einer erfindungsgemäßen Montagehülle mit einem Gassack in einer Seitensicht;
Fig. 3 eine Darstellung der erfindungsgemäßen geschlossenen Montagehülle für den Gassack in einer Seitenansicht ;
Fig. 4 eine schematische Darstellung der erfindungsgemäßen geschlossenen Montagehülle für den Gassack in einer perspektivischen Ansicht; und
Fig. 5 eine schematische Darstellung der erfindungsgemäßen geöffneten Montagehülle für den Gassack in einer Seitenansicht.

Im Folgenden werden für gleiche und gleich wirkende Teile gleiche Bezugsziffern verwendet.

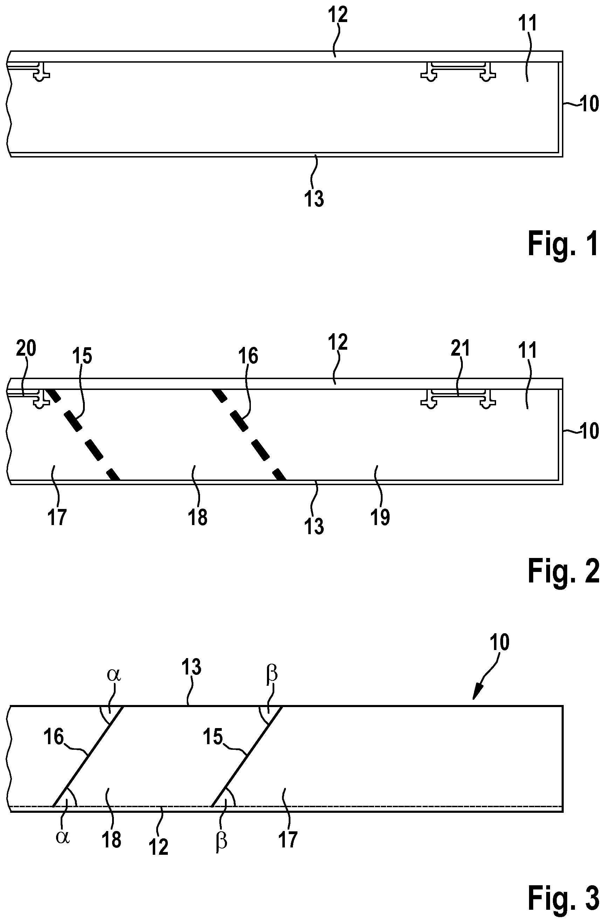

Die Figur 1 zeigt eine schematische Darstellung einer Montagehülle 10 für einen Gassack 11 aus dem Stand der Technik in einer Seitenansicht. Die Montagehülle 10 ist zur Aufnahme des Gassacks 11 für ein Fahrzeuginsassen-Rückhaltesystems ausgebildet. Der Gassack 11 ist grundsätzlich aus einem Ruhezustand in einen aufgeblasenen Zustand überführbar und im aufgeblasenen Zustand bildet der Gassack 11 eine Aufprallfläche für einen Fahrzeuginsassen. Des Weiteren weist die Montagehülle 10 eine Naht 12 auf, die zumindest teilweise von einem vorzugsweise eine Perforierung aufweisenden ersten Vorschnitt 13 zum Öffnen der Montagehülle 10 beim Aufblasen des Gassacks 11 beabstandet angeordnet ist. Problematisch beim Einsatz der Montagehülle 10 ist, dass der Gassack 11 beim Aufblasen die Montagehülle 10, insbesondere den ersten Vorschnitt 13 nur teilweise oder gar nicht öffnet. Die beim Aufblasen durch den Gassack 11 entstehenden Kräfte hängen unter anderem von der Temperatur und der Temperatur des Gasgenerators, insbesondere des Gases ab. Falls die Temperatur des Gases, beispielsweise in kälteren Regionen oder in der Winterzeit sehr niedrig ist und/oder ein Gasgenerator des Gassacks zu wenig Gas bereitstellen kann, können die durch den Gassack 11 erzeugten und auf die Montagehülle 12 wirkenden Kräfte zu gering sein, um den ersten Vorschnitt 13 zuverlässig zu öffnen. Auch bei einem ungünstigen Aufblasen des Gassacks 11 in der Montagehülle 10 könnten die durch den Gassack 11 erzeugten Kräfte zuerst auf die Naht 13 wirken und weniger auf den ersten Vorschnitt 13 wirken.

In der Konsequenz besteht die Gefahr, dass sich unter Umständen der erste Vorschnitt 13 nur teilweise oder gar nicht öffnet, so dass ein Schutz eines Fahrzeuginsassen bei einem Unfall durch den Gassack 11 dann gefährdet ist.

Die Figur 2 zeigt eine schematische Darstellung einer erfindungsgemäßen Montagehülle 10 für einen Gassack 11 in einer Seitenansicht. Die erfindungsgemäße Montagehülle 10 ist zur Aufnahme des Gassacks 11 für ein Fahrzeuginsassen-Rückhaltesystems ausgebildet. Der Gassack 11 ist aus einem Ruhezustand in einen aufgeblasenen Zustand überführbar und im aufgeblasenen Zustand bildet der Gassack 11 eine Aufprallfläche für einen Fahrzeuginsassen. Des Weiteren weist die Montagehülle 10 eine Naht 12 auf, die zumindest teilweise von einem vorzugsweise eine Perforierung aufweisenden ersten Vorschnitt 13 zum Öffnen der Montagehülle 10 beim Aufblasen des Gassacks 11 beabstandet angeordnet ist. Die Perforierung kann mehrere nebeneinander angeordnete Öffnungen, vorzugsweise Löcher umfassen.

Ferner sind an der Montagehülle 10 zwei Befestigungsvorrichtung 20, 21 zum Befestigen der Montagehülle 10 an dem Kraftfahrzeug, insbesondere an einem Dachhimmel des Kraftfahrzeugs angeordnet.

Die Figur 3 zeigt, dass sich der zweite Vorschnitt 15 und der dritte Vorschnitt 16 von der Naht 12 bis zum ersten Vorschnitt 13 erstrecken. Dabei ist der zweite Vorschnitt 15 und der dritte Vorschnitt 16 von der Naht 12 zum ersten Vorschnitt 13 diagonal verlaufend angeordnet.

Durch diese Anordnung bildet ein Teilabschnitt der Naht 12 und ein Teilabschnitt des ersten Vorschnitts 13 mit dem zweiten Vorschnitt 15 und dem dritten Vorschnitt 16 ein Parallelogramm, wobei der erste Vorschnitt 13 parallel zur Naht 12 angeordnet ist und der zweite Vorschnitt 15 parallel zum dritten Vorschnitt 16 angeordnet ist. Ein Winkel α zwischen dem dritten Vorschnitt 16 und der Naht 12 und dem ersten Vorschnitt 13 beträgt im vorliegenden Fall etwa 55° und sollte für ein zuverlässiges Öffnen des ersten Vorschnitts 13 beim Aufblasen des Gassacks 11 im Bereich von 40° bis 60° liegen.

Auch ein Winkel β zwischen dem zweiten Vorschnitt 15 und der Naht 12 und dem ersten Vorschnitt 13 beträgt im vorliegenden Fall etwa 55° und sollte für ein zuverlässiges Öffnen des ersten Vorschnitts 13 beim Aufblasen des Gassacks 11 im Bereich von 40° bis 60° liegen.

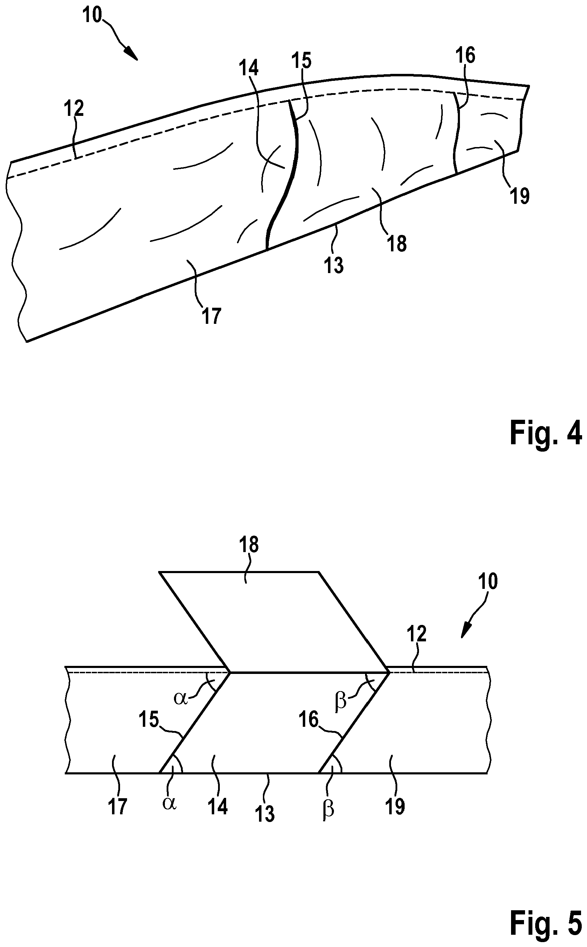

Die Figur 4 zeigt, dass die Montagehülle 10 schlauchförmig ausgebildet ist und eine Aufnahmekammer 14 aufweist, die zur Aufnahme des Gassacks 11 ausgestaltet ist. Um ein Öffnen der Montagehülle 10 beim Aufblasen des Gassacks 11 unabhängig von der Temperatur des Gasgenerators, insbesondere des Gases sicherzustellen, ist gemäß der Erfindung vorgesehen, dass die Montagehülle 10 mindestens einen zweiten Vorschnitt 15 aufweist, der zumindest teilweise zwischen der Naht 12 und dem ersten Vorschnitt 13 angeordnet ist. Wie in den Figuren 2 bis 5 dargestellt, weist die Montagehülle 10 noch einen dritten Vorschnitt 16 auf, der ebenfalls zumindest teilweise zwischen der Naht 12 und dem ersten Vorschnitt 13 angeordnet ist, um das Öffnen der Montagehülle 10, insbesondere des ersten Vorschnitts 13 beim Aufblasen des Gassacks 11 weiter zu vereinfachen. Hierbei ist der zweite Vorschnitt 15 und der dritte Vorschnitt 16 als durchgehender und ununterbrochener Schnitt ausgebildet, welcher beispielsweise mit einer Schneidvorrichtung hergestellt werden kann, indem vorzugsweise eine scharfe Klinge jeweils einen Schnitt in eine Oberfläche der Montagehülle 10 schneidet. Alternativ könnte der der zweite Vorschnitt 15 und/oder der dritte Vorschnitt 16 genauso ausgebildet sein, wie der erste Vorschnitt 13. Dies bedeutet dann, dass der zweite Vorschnitt 15 und/oder der dritte Vorschnitt 16 ebenfalls eine Perforierung aufweisen.

Der erste Vorschnitt 13, der zweite Vorschnitt 15 und der dritte Vorschnitt 16 teilen einen ersten Abschnitt der Montagehülle 10 in eine erste Zone 17, eine zweite Zone 18 und eine dritte Zone 19 auf, wobei die zwischen der ersten Zone 17 und der dritten Zone 19 angeordnete zweite Zone 18 an dem ersten Vorschnitt 13 beim Aufblasen des Gassacks 11 einen Sollrissabschnitt ausbildet, wie dies beispielsweise in der Figur 5 visualisiert ist.

Die dritte Zone 19 ist, wie in Fig. 4 gezeigt, ein vorderer oder hinterer Endabschnitt der Montagehülle des Gassackmoduls, z. B. eines Seitenkopfgassackmoduls (Curtain). Die Montagehülle kann in diesem Bereich verjüngt ausgebildet sein.

Die Figur 5 zeigt eine schematische Darstellung der erfindungsgemäßen Montagehülle 10 für einen Gassack 11 in einer geöffneten Position. Der Sollrissabschnitt, welcher an dem Übergang zwischen der zweiten Zone 18 und dem ersten Vorschnitt 13 ausgebildet ist, ist geöffnet und aufgeklappt. Dadurch ist ein Einblick in die Aufnahmekammer 14 der Montagehülle 10 gegeben, welcher zu Haltern eines Gassacks 11 in einem gefalteten Ruhezustand ausgebildet ist. Auf eine wiederholte Beschreibung identischer Merkmale vorausgehender Figuren wird verzichtet.

Ein Gassackmodul für ein Fahrzeuginsassen-Rückhaltesystem, insbesondere Fahrergassackmodul oder Beifahrergassackmodul umfasst mindestens die Montagehülle 10 und den oben beschriebenen Gassack 11. Zum Aufblasen des Gassacks 11 in der Montagehülle 10 wird das Gassackmodul ausgelöst und aufgeblasen. Dabei wird die Montagehülle 10 aufgebläht und der erste Vorschnitt 13 zumindest im Bereich des Sollrissabschnitts der zweiten Zone 18 an dem ersten Vorschnitt 13 reißt auf. Beim Auftreten von Kräften, welche beim Aufblasen des Gassacks 11 entstehen und auf die Naht 12 wirken, werden durch die diagonal verlaufenden Vorschnitte 15, 16 die Kräfte auf den ersten Vorschnitt 13 umgeleitet.

Durch die diagonal verlaufenden Vorschnitte 15, 16 wirkt somit immer ein X-Teil und ein Y-Teil der Kraft auf den ersten Vorschnitt 13, so dass ein Öffnen des ersten Vorschnitts 13 beim Aufblasen des Gassacks 11 gewährleistet wird. Dadurch kann der Gassack 11 sicher und zuverlässig aus der Montagehülle 10 heraustreten.

### Bezugszeichenliste

- 10: Montagehülle
- 11: Gassack
- 12: Naht
- 13: erster Vorschnitt
- 14: Aufnahmekammer
- 15: zweiter Vorschnitt
- 16: dritter Vorschnitt
- 17: erste Zone
- 18: zweite Zone
- 19: dritte Zone
- 20: erste Befestigungsvorrichtung
- 21: zweite Befestigungsvorrichtung

## Patentansprüche

1. Montagehülle (10) zur Aufnahme eines Gassackes (11) für ein Fahrzeuginsassen-Rückhaltesystem, der aus einem Ruhezustand in einen aufgeblasenen Zustand überführbar ist und im aufgeblasenen Zustand eine Aufprallfläche für einen Fahrzeuginsassen bildet, wobei die Montagehülle (10) eine Naht (12) aufweist, die zumindest teilweise von einem - vorzugsweise eine Perforierung aufweisenden - ersten Vorschnitt (13) zum Öffnen der Montagehülle (10) beim Aufblasen des Gassackes (11) beabstandet angeordnet ist, wobei
die Montagehülle (10) einen zweiten Vorschnitt (15) und einen dritten Vorschnitt (16) aufweist, die zumindest teilweise zwischen der Naht (12) und dem ersten Vorschnitt (13) angeordnet sind, **dadurch gekennzeichnet, dass**
der erste Vorschnitt (13), der zweite Vorschnitt (15) und der dritte Vorschnitt (16) einen ersten Abschnitt der Montagehülle (10) in eine erste Zone (17), eine zweite Zone (18) und eine dritte Zone (19) aufteilen, wobei die dritte Zone (19) ein vorderer oder hinterer Endabschnitt der Montagehülle (10) ist, und wobei die zwischen der ersten Zone (17) und der dritten Zone (19) angeordnete zweite Zone (18) an dem ersten Vorschnitt (13) beim Aufblasen des Gassackes (11) einen Sollrissabschnitt ausbildet.

2. Montagehülle (10) nach einem der vorangehenden Ansprüche, **dadurch gekennzeichnet, dass** der zweite Vorschnitt (15) und/oder der dritte Vorschnitt (16) als durchgehender und ununterbrochener Schnitt ausgebildet sind, oder **dadurch gekennzeichnet, dass** der zweite Vorschnitt (15) und/oder der dritte Vorschnitt (16) als unterbrochener Schnitt ausgebildet sind bzw. eine Perforierung aufweisen.

3. Montagehülle (10) nach einem der vorangehenden Ansprüche, **dadurch gekennzeichnet, dass** der zweite Vorschnitt (15) und/oder der dritte Vorschnitt (16) zumindest teilweise von der Naht (12) zum ersten Vorschnitt (13) diagonal verlaufend angeordnet ist, oder **dadurch gekennzeichnet, dass** sich der zweite Vorschnitt (15) und/oder der dritte Vorschnitt (16) von der Naht (12) bis zum ersten Vorschnitt (13) erstrecken.

4. Montagehülle (10) nach einem der vorangehenden Ansprüche, **dadurch gekennzeichnet, dass** ein Winkel α zwischen dem zweiten Vorschnitt (15) und der Naht (12) und/oder dem ersten Vorschnitt (13) 40° bis 60° beträgt, und / oder **dadurch gekennzeichnet, dass** ein Winkel β zwischen dem dritten Vorschnitt (16) und der Naht (12) und/oder dem ersten Vorschnitt (13) 40° bis 60° beträgt.

5. Montagehülle (10) nach einem der vorangehenden Ansprüche, **dadurch gekennzeichnet, dass** ein Teilabschnitt der Naht (12) und ein Teilabschnitt des ersten Vorschnitts (13) mit dem zweiten Vorschnitt (15) und dem dritten Vorschnitt (16) ein Parallelogramm bilden, wobei der erste Vorschnitt (13) parallel zur Naht (12) angeordnet ist und der zweite Vorschnitt (15) parallel zum dritten Vorschnitt (16) angeordnet ist.

6. Montagehülle (10) nach einem der vorangehenden Ansprüche, **dadurch gekennzeichnet, dass** an der Montagehülle (10) mindestens eine Befestigungsvorrichtung (20, 21) zum Befestigen der Montagehülle (10) an dem Kraftfahrzeug, insbesondere an einem Dachhimmel des Kraftfahrzeugs, angeordnet ist.

7. Montagehülle (10) nach einem der vorangehenden Ansprüche, **dadurch gekennzeichnet, dass** die Montagehülle (10) schlauchförmig ausgebildet ist.

8. Montagehülle (10) nach einem der vorangehenden Ansprüche, **dadurch gekennzeichnet, dass** die Montagehülle (10) im Bereich der dritten Zone (19) verjüngt ausgebildet ist.

9. Gassackmodul für ein Fahrzeuginsassen-Rückhaltesystem, insbesondere Seitenvorhanggassackmodul, Fahrer- und/ oder Beifahrerfrontgassackmodul, Heckscheibenvorhanggassackmodul oder Insassen-Interaktionsgassackmodul mit einer Montagehülle (10) zur Aufnahme eines Gassackes (11) nach einem der Ansprüche 1 bis 8.

10. Fahrzeuginsassensicherheitssystem, insbesondere zum Schutz einer Person, beispielsweise eines Fahrzeuginsassen, mit einem Gassackmodul nach Anspruch 9 und wenigstens einem Sensor zur Erfassung von Fahrzeugzustandsdaten sowie einer Aktivierungseinheit, die ausgebildet ist, ein Auslösesignal in Abhängigkeit erfasster Fahrzeugbewegungsdaten an das Gassackmodul zu senden.

11. Verfahren zum Aufblasen eines Gassacks (11) in einer Montagehülle (10) nach einem der Ansprüche 1 bis 10, bei dem
a) das Gassackmodul ausgelöst und aufgeblasen wird,
b) die Montagehülle (10) aufgebläht und der erste Vorschnitt (13) zumindest im Bereich des Sollrissabschnitts der zweiten Zone (18) an dem ersten Vorschnitt (13) aufreißt, und
c) der Gassack (11) aus der Montagehülle (10) heraustritt.

## Claims

1. A mounting jacket (10) for receiving an airbag (11) for a vehicle occupant restraint system which can be transferred from an idle condition to an inflated condition and in the inflated condition forms an impact area for a vehicle occupant, the mounting jacket (10) including a seam (12) which is arranged at least partially at a distance from a first precut (13) - preferably including a perforation - for opening the mounting jacket (10) upon inflation of the airbag (11), wherein the mounting jacket (10) includes a second precut (15) and a third precut (16), which are arranged at least partially between the seam (12) and the first precut (13),
**characterized in that**
the first precut (13), the second precut (15), and the third precut (16) divide a first portion of the mounting jacket (10) into a first zone (17), a second zone (18) and a third zone (19), with the third zone (19) being a front or rear end portion of the mounting jacket (10), and with the second zone (18) being disposed between the first zone (17) and the third zone (19) forming a predetermined tearing portion at the first precut (13) upon inflation of the airbag (11).

2. The mounting jacket (10) according to any one of the preceding claims, **characterized in that** the second precut (15) and/or the third precut (16) are in the form of a continuous and uninterrupted cut, or **characterized in that** the second precut (15) and/or the third precut (16) are in the form of an interrupted cut and, resp., include a perforation.

3. The mounting jacket (10) according to any one of the preceding claims, **characterized in that** the second precut (15) and/or the third precut (16) is/are arranged to be diagonally extending at least partially from the seam (12) to the first precut (13), or **characterized in that** the second precut (15) and/or the third precut (16) extend(s) from the seam (12) to the first precut (13).

4. The mounting jacket (10) according to any one of the preceding claims, **characterized in that** an angle α between the second precut (15) and the seam (12) and/or the first precut (13) is from 40° to 60°, and/or **characterized in that** an angle β between the third precut (16) and the seam (12) and/or the first precut (13) is from 40° to 60°.

5. The mounting jacket (10) according to any one of the preceding claims, **characterized in that** a segment of the seam (12) and a segment of the first precut (13) form a parallelogram with the second precut (15) and the third precut (16), with the first precut (13) being arranged in parallel to the seam (12) and the second precut (15) being arranged in parallel to the third precut (16).

6. The mounting jacket (10) according to any one of the preceding claims, **characterized in that** at least one fastening device (20, 21) for fastening the mounting jacket (10) to the vehicle, especially to a roof liner of the vehicle, is arranged on the mounting jacket (10).

7. The mounting jacket (10) according to any one of the preceding claims, **characterized in that** the mounting jacket (10) is tubular.

8. The mounting jacket (10) according to any one of the preceding claims, **characterized in that** the mounting jacket (10) is tapered in the area of the third zone (19).

9. An airbag module for a vehicle occupant restraint system, especially a side curtain airbag module, driver and/or passenger front airbag module, rear window curtain airbag module or occupant interaction airbag module comprising a mounting jacket (10) for receiving an airbag (11) according to any one of the claims 1 to 8.

10. A vehicle occupant safety system, especially for the protection of a person, for example a vehicle occupant, comprising an airbag module according to claim 9 and at least one sensor for detecting vehicle condition data as well as an activating unit which is configured to send a release signal in response to detected vehicle movement data to the airbag module.

11. A method of inflating an airbag (11) in a mounting jacket (10) according to any one of the claims 1 to 12, in which
a) the airbag module is released and inflated,
b) the mounting jacket (10) is swollen and the first precut (13) tears at least in the area of the predetermined tearing portion of the second zone (18) at the first precut (13), and
c) the airbag (11) leaves the mounting jacket (10).

## Revendications

1. Gaine de montage (10) destinée à recevoir un coussin gonflable (11) pour un système de retenue de passager de véhicule, qui peut passer d'un état de repos à un état gonflé et qui, à l'état gonflé, forme une surface d'impact pour un passager de véhicule, pour lequel la gaine de montage (10) présente une couture (12), laquelle est disposée au moins partiellement à distance d'une première prédécoupe (13) - présentant de préférence une perforation - pour ouvrir la gaine de montage (10) lors du gonflage du coussin gonflable (11), pour lequel
la gaine de montage (10) présente une deuxième prédécoupe (15) et une troisième prédécoupe (16) qui sont disposées au moins partiellement entre la couture (12) et la première prédécoupe (13), **caractérisée en ce que**
la première prédécoupe (13), la deuxième prédécoupe (15) et la troisième prédécoupe (16) divisent une première section de la gaine de montage (10) en une première zone (17), une deuxième zone (18) et une troisième zone (19), pour lequel la troisième zone (19) est une section d'extrémité avant ou arrière de la gaine de montage (10), et pour lequel la deuxième zone (18) disposée entre la première zone (17) et la troisième zone (19) forme une section de rupture théorique sur la première prédécoupe (13) lors du gonflage du coussin gonflable (11).

2. Gaine de montage (10) selon l'une des revendications précédentes, **caractérisée en ce que** la deuxième prédécoupe (15) et/ou la troisième prédécoupe (16) sont réalisées sous forme de découpe continue et ininterrompue, ou **caractérisée en ce que** la deuxième prédécoupe (15) et/ou la troisième prédécoupe (16) sont réalisées sous forme de découpe interrompue ou présentent une perforation.

3. Gaine de montage (10) selon l'une des revendications précédentes, **caractérisée en ce que** la deuxième prédécoupe (15) et/ou la troisième prédécoupe (16) est disposée au moins partiellement en diagonale de la couture (12) à la première prédécoupe (13), ou **caractérisée en ce que** la deuxième prédécoupe (15) et/ou la troisième prédécoupe (16) s'étendent de la couture (12) à la première prédécoupe (13).

4. Gaine de montage (10) selon l'une des revendications précédentes, **caractérisée en ce qu'**un angle α entre la deuxième prédécoupe (15) et la couture (12) et/ou la première prédécoupe (13) est de 40° à 60°, et/ou **caractérisée en ce qu'**un angle β entre la troisième prédécoupe (16) et la couture (12) et/ou la première prédécoupe (13) est de 40° à 60°.

5. Gaine de montage (10) selon l'une des revendications précédentes, **caractérisée en ce qu'**une partie de la couture (12) et une partie de la première prédécoupe (13) forment un parallélogramme avec la deuxième prédécoupe (15) et la troisième prédécoupe (16), pour lequel la première prédécoupe (13) est disposée parallèlement à la couture (12) et la deuxième prédécoupe (15) est disposée parallèlement à la troisième prédécoupe (16).

6. Gaine de montage (10) selon l'une des revendications précédentes, **caractérisée en ce qu'**au moins un dispositif de fixation (20, 21) est disposé sur la gaine de montage (10) pour fixer la gaine de montage (10) sur le véhicule automobile, en particulier au plafond du véhicule automobile.

7. Gaine de montage (10) selon l'une des revendications précédentes, **caractérisée en ce que** la gaine de montage (10) est réalisée sous forme de tuyau.

8. Gaine de montage (10) selon l'une des revendications précédentes, **caractérisée en ce que** la gaine de montage (10) est rétrécie au niveau de la troisième zone (19).

9. Module airbag pour un système de retenue des occupants d'un véhicule, en particulier pour un module airbag rideau latéral, pour un module airbag frontal pour conducteur et/ou passager, module airbag rideau de lunette arrière ou module airbag en interaction avec les occupants, comportant une gaine de montage (10) destinée à recevoir un coussin gonflable (11) selon l'une des revendications 1 à 8.

10. Système de sécurité pour occupant de véhicule, en particulier pour la protection d'une personne, par exemple d'un occupant de véhicule, comprenant un module airbag selon la revendication 9 et au moins un capteur pour détecter des données d'état du véhicule ainsi qu'une unité d'activation, laquelle est conçue pour envoyer un signal de déclenchement au module airbag en fonction des données détectées de mouvement du véhicule.

11. Procédé de gonflage d'un coussin gonflable (11) dans une gaine de montage (10) selon l'une des revendications 1 à 10, selon lequel
a) le module airbag est déclenché et gonflé,
b) la gaine de montage (10) est gonflée et la première prédécoupe (13) se découpe au moins dans la région de la section de découpe théorique de la deuxième zone (18) sur la première prédécoupe (13), et
c) le coussin gonflable (11) sort de la gaine de montage (10).
